# EUROPÄISCHE PATENTSCHRIFT

(11) **EP 3 248 837 B1**
(45) Veröffentlichungstag und Bekanntmachung des Hinweises auf die Patenterteilung: **12.08.2020**
(21) Anmeldenummer: 16171307.8
(22) Anmeldetag: 25.05.2016
(51) Int. Cl.: B60P 7/08

(54) **KOFFERAUFBAU EINES NUTZFAHRZEUGS MIT LADUNGSSICHERUNGSSCHIENE**
BOX BODY OF A COMMERCIAL VEHICLE WITH LOAD SECURING RAIL
CAISSON D'UN VEHICULE UTILITAIRE DOTE DE RAIL DE SECURISATION DE CHARGE

(43) Veröffentlichungstag der Anmeldung: 29.11.2017
(73) Patentinhaber: Schmitz Cargobull AG, 48341 Altenberge (DE)
(72) Erfinder: Beelmann, Reinhard, 45721 Haltern am See (DE)
(74) Vertreter: Cohausz & Florack

(56) Entgegenhaltungen:
- FR-A3- 2 935 316
- JP-A- 2004 042 738
- US-A1- 2002 100 171
- US-A1- 2003 210 966

## Beschreibung

Die Erfindung betrifft einen Kofferaufbau für ein Nutzfahrzeug, insbesondere Lastkraftwagen, Anhänger oder Sattelauflieger, mit wenigstens einem Paneel, wobei angrenzend zum Laderaum in wenigstens einer Mulde des wenigstens einen Paneels wenigstens eine Ladungssicherungsschiene wenigstens teilweise aufgenommen ist, wobei die Mulde sich in Längsrichtung erstreckende Randbereiche und dazwischen einen Bodenbereich aufweist, wobei die Ladungssicherungsschiene einen sich in Längsrichtung erstreckenden und in Längsrichtung verteilte Öffnungen zum Einführen von Ladungssicherungsmitteln bereitstellenden Eingriffsabschnitt aufweist und wobei zwischen dem Eingriffsabschnitt und dem Bodenbereich der Mulde ein Aufnahmeraum zum teilweisen Aufnehmen der durch die Öffnungen eingeführten Ladungssicherungsmittel vorgesehen ist.

Nutzfahrzeuge, etwa in Form von Lastkraftwagen, Anhängern oder Sattelaufliegern, die Kofferaufbauten tragen, sind in unterschiedlicher Ausgestaltung bekannt. Dabei sind die Nutzfahrzeuge vorzugsweise zum Transport von Gütern, also der zu transportierenden Ladung, überwiegend im öffentlichen Straßenverkehr vorgesehen. Die Kofferaufbauten dieser Nutzfahrzeuge zeichnen sich durch feste Seitenwände, ein festes Dach und eine feste Stirnwand aus und unterscheiden sich insoweit von sogenannten Planenaufbauten, bei denen wenigstens eine Seitenwand und regelmäßig auch das Dach durch eine Plane verschlossen ist. Die festen Wände der Kofferaufbauten sind typischerweise als Paneele aufgebaut. Bekannt ist dabei insbesondere der Aufbau der Paneele durch eine äußere Decklage, eine innere Decklage und eine dazwischen vorgesehene Kernlage, die meist aus einem geschäumten Kunststoff gebildet wird. Die Decklagen sind bedarfsweise selbst mehrlagig aufgebaut und umfassen wenigstens eine strukturgebende Lage, die dem Paneel die ausreichende Steifigkeit verleiht. Die strukturgebende Lage kann beispielsweise als Kunststoffschicht, insbesondere als faserverstärkte Kunststoffschicht ausgebildet sein. In vielen Fällen wird die strukturgebende Lage der Decklagen durch ein Blech, insbesondere Aluminium- oder Stahlblech, bereitgestellt.

Die Paneele umschließen einen Laderaum des Kofferaufbaus, in dem die Ladung aufgenommen werden kann. Da die Paneele von Kofferaufbauten Feuchtigkeit aus dem Laderaum fernhalten, werden Kofferaufbauten vielfach zum Trockentransport von feuchtigkeitsempfindlichen Gütern eingesetzt. Da zudem der geschäumte Kunststoff der Kernlage eine gute thermische Isolation des Laderaums ermöglicht, werden Kofferaufbauten auch häufig zum Kühltransport von temperaturempfindlichen Gütern verwendet.

Die Ladung im Laderaum des Kofferaufbaus muss gegenüber einem Verrutschen gesichert werden. Man spricht in diesem Zusammenhang auch von der Ladungssicherung. Die Ladungssicherung erfolgt beispielsweise mit sogenannten Zurrgurten, die um die Ladung gespannt und in Ladungssicherungsschienen gesichert werden können. Andere Ladungssicherungsmittel wie Ladungssicherungsbalken, die quer hinter der Ladung angeordnet werden, sind ebenfalls bekannt. Da die Ladungssicherung je nach Beladungssituation des Kofferaufbaus an unterschiedlichen Stellen erfolgen muss, sind Kofferaufbauten typischerweise mit sogenannten Ladungssicherungsschienen in den Seitenwänden ausgerüstet. Dabei können über die Längserstreckung der Seitenwandpaneele durchgehende Ladungssicherungsschienen oder aber mehrere Ladungssicherungsschienen hintereinander vorgesehen sein.

Die Ladungssicherungsschienen sind regelmäßig bündig in der Innenseite des Seitenwandpaneels eingelassen. Dazu ist die Kernlage bereichsweise dünner ausgebildet und formt die innere Decklage eine Mulde im Paneel. Die Mulde ist in Form einer Rinne ausgebildet und dient als Vertiefung im Paneel der Aufnahme der Ladungssicherungsschiene. Die Ränder der Ladungssicherungsschiene werden dann mit den Rändern der Mulde verklebt, um die Ladungssicherungsschiene sicher in der Mulde zu halten und die Ladungssicherungskräfte an das Paneel abgeben zu können. Zwischen den Randbereichen der Mulde, in denen die innere Decklage mit der Ladungssicherungsschiene verklebt ist, erstreckt sich der Bodenbereich der Mulde, die etwa U-förmig ausgebildet ist.

Der Bodenbereich wird wenigstens von einem Eingriffsabschnitt überdeckt, der sich in Längsrichtung der Ladungssicherungsschiene erstreckt und in dieser Richtung verteilt eine Vielzahl von Öffnungen aufweist, in denen Ladungssicherungsmittel eingreifen, insbesondere eingehakt werden, können. Zwischen dem Eingriffsabschnitt der Ladungssicherungsschiene und dem Bodenbereich der Mulde wird so ein Aufnahmeraum geschaffen, in dem die Teile der Ladungssicherungsmittel aufgenommen werden können, die durch die Öffnungen in die Mulde eingeführt werden. Aus dem Eingriffsabschnitt der Ladungssicherungsschiene sind zudem zwischen den Öffnungen in regelmäßigen Abständen Laschen nach hinten in Richtung des Bodenbereichs der Mulde gebogen, gegen die sich die innere Decklage beim Ausschäumen des Paneels abstützen kann. Das Ausschäumen des Paneels mit der Kernlage zwischen den Decklagen erfolgt, nachdem die Ladungssicherungsschiene mit der inneren Decklage verbunden worden ist. Beim Ausschäumen der Kernlage drückt diese nämlich gegen die innere Decklage und würde die innere Decklage ohne die Ladungssicherung im Bereich der Mulde nach außen drücken. Dies wird durch die Laschen der Ladungssicherungsschiene verhindert. Andernfalls müsste das Ausschäumen in einer Form erfolgen, die das Verformen der inneren Decklage nach außen, also in Richtung des späteren Laderaums, verhindert. Die Form könnte dann aber nicht mehr flexibel für unterschiedliche Paneele genutzt werden. Allerdings ist das Ausgestalten der Laschen aufwendig und schränken die Laschen die Freiheitsgrade bei der Ausgestaltung der Ladungssicherungsschienen ein.

Dieser Nachteil kann durch stranggepresste Ladungssicherungsschienen vermieden werden, deren rückseitige Kontur im Wesentlichen der Kontur der zugehörigen Mulde entspricht, so dass die Ladungssicherungsschiene im Wesentlichen vollflächig an der Mulde anliegen und/oder im Wesentlichen vollflächig mit der Mulde verklebt sein kann. Die innere Decklage kann dann beim Ausschäumen der Kernlage mit Kunststoff nicht mehr nach außen gebogen werden. Entsprechende Ladungssicherungsschienen sind jedoch sehr massiv ausgebildet. Dadurch sind die Ladungssicherungsschienen sehr schwer und auch kostenintensiv in der Herstellung, was deren Einsatz auf spezielle Anwendungen begrenzt. Eine entsprechende Ladungssicherungsschiene ist in der DE 10 2011 008 254 A1 und der US 2003/210966 A1 beschrieben worden.

Daher liegt der vorliegenden Erfindung die Aufgabe zugrunde, den Kofferaufbau der eingangs genannten und zuvor näher erläuterten Art derart auszugestalten und weiterzubilden, dass mehr Freiheitsgrade bei der Ausgestaltung der Ladungssicherungsschiene bereitgestellt werden können, ohne die Kosten und das Gewicht der Ladungssicherungsschiene nennenswert zu steigern.

Diese Aufgabe ist durch den Merkmalen des Anspruchs 1 gelöst.

Die Erfindung hat erkannt, dass es zweckmäßig ist, die Öffnungen der Ladungssicherungsschiene auf einen schmaleren Bereich der Ladungssicherungsschiene zu konzentrieren. Die Öffnungen der Ladungssicherungsschiene können also in einem schmaleren, sich in Längsrichtung der Ladungssicherungsschiene erstreckenden Band, dem Eingriffsabschnitt, zusammengefasst werden. Die Konzentration von Öffnungen zum Eingreifen von Ladungssicherungsmitteln kann unter anderem deshalb erreichet werden, weil zwischen den Öffnungen auf Laschen zum Abstützen der Ladungssicherungsschiene auf dem Bodenbereich der Mulde verzichtet wird, die dafür sorgen sollen, dass sich der Bodenbereich der Mulde beim Ausschäumen des Paneels nicht nach außen biegt bzw. die Mulde nicht aus dem Paneel herausgedrückt wird.

Dies ist möglich, da durch die Konzentration der Öffnungen des Eingriffsabschnitts auf einen schmaleren Bereich an den Längsseiten des Eingriffsabschnitts Platz geschaffen wird, um dort sich am Bodenbereich der Mulde abstützende und sich in Längsrichtung der Ladungssicherungsschiene bzw. längs des jeweils angrenzenden Eingriffsabschnitts erstreckende Stützabschnitte vorzusehen, ohne die Mulde verbreitern zu müssen. Eine Verbreiterung der Mulde hätte zur Folge, dass der Bodenbereich zwischen den Stützbereichen beim Ausschäumen nach außen gedrückt würde, so dass die in die Ladungssicherungsschiene eingreifenden Ladungssicherungsmittel nicht mehr zuverlässig im Aufnahmeraum zwischen dem Eingriffsabschnitt und dem Bodenbereich der Mulde aufgenommen werden könnten. Somit können die in regelmäßigen Abständen im Eingriffsbereich vorgesehenen Laschen durch sich außerhalb des Eingriffsbereichs bedarfsweise durchgängig in Längserstreckung verlaufende Stützabschnitte ersetzt werden.

Dies bietet den weiteren Vorteil, dass durch die Konzentration der Eingriffsöffnungen ein engeres Raster für die Ladungssicherung bereitgestellt werden kann. Es muss also bei der Anordnung der Ladungssicherungsmittel kein Kompromiss eingegangen werden. Es ist nämlich an der jeweils an der für die Ladungssicherung besonders geeigneten Position auch eine Öffnung vorhanden. Außerdem können durch die Konzentration der Öffnungen im Eingriffsabschnitt mehr Ladungssicherungsmittel auf engem Raum nebeneinander positioniert bzw. an der Ladungssicherungsschiene festgelegt werden.

Besonders bevorzugt für die Ladungssicherung ist es, wenn das die Ladungsschiene aufweisende Paneel ein Seitenwandpaneel des Kofferaufbaus ist. Dort ist die Ladungssicherung leicht zugänglich und kann die Ladungssicherung zweckmäßig zur Ladungssicherung der Ladung genutzt werden. Daher sind bevorzugt beide Seitenwandpaneele mit Ladungssicherungsschienen ausgerüstet. Dann ist auch eine Befestigung eines Ladungssicherungsmittels, insbesondere eines Ladungssicherungsbalkens, in Ladungssicherungsschienen an gegenüberliegenden Seitenwandpaneelen möglich. Es kann alternativ oder zusätzlich auch eine Ladungssicherungsschiene am Dachpaneel oder am Stirnwandpaneel vorgesehen sein.

Bei einer ersten besonders bevorzugten Ausgestaltung des Kofferaufbaus ist der Aufnahmeraum frei von sich am Bodenbereich der Mulde abstützenden Stützabschnitten. Auf diese Weise kann eine sehr große Dichte an Öffnungen bzw. ein sehr feines Raster für die Ladungssicherung bereitgestellt werden. Dies gilt insbesondere dann, wenn keine Laschen zwischen den Öffnungen des Eingriffsabschnitts vorgesehen sind, die dazu führen können, dass die Öffnungen einen größeren Abstand zueinander aufweisen. Die Abstützung wird also vorzugsweise gänzlich nach außen in die Stützabschnitte verlegt. Die Stützabschnitte werden zudem vorzugsweise infolge der Konzentration der Öffnungen im Eingriffsabschnitt in so geringem Abstand zueinander vorgesehen, dass es keiner weiteren sich am Bodenbereich der Mulde abstützenden Laschen bedarf.

Alternativ oder zusätzlich kann der Aufnahmeraum zum teilweisen Aufnehmen der Ladungssicherungsmittel zwischen dem Eingriffsabschnitt, dem Bodenbereich der Mulde und den Stützabschnitten ausgebildet sein. Dadurch wird genügend Raum bereitgestellt, in dem die durch die Öffnungen geführten Teile der Ladungssicherungsmittel aufgenommen werden können, ohne besonders tiefe Mulden vorsehen zu müssen. Außerdem ist es nicht erforderlich, den Aufnahmeraum in der Ladungssicherungsschiene selbst bereitzustellen, sondern zwischen der Ladungssicherungsschiene und der Mulde. Auf diese Weise wird bei gleicher Tiefe der Mulde ein größerer bzw. tieferer Aufnahmeraum geschaffen. Zu breit sollte der Aufnahmeraum nämlich nicht sein. Wenn die Stützabschnitte zu weit voneinander entfernt sind, besteht nämlich die Gefahr des sich nach außen biegenden Bodenbereichs der Mulde, welche dann die Tiefe des Aufnahmeraums verringern würde. Dies bedeutet auch, dass die Stützabschnitte vorzugsweise lediglich durch den Eingriffsabschnitt miteinander verbunden werden und dann zwischen dem Eingriffsabschnitt und dem Bodenbereich der Mulde keine weitere Verbindung zwischen den Stützabschnitten in der Ladungssicherungsschiene vorgesehen ist. Eine entsprechende zusätzliche Verbindung zwischen den Stützabschnitten würde den Aufnahmeraum seinerseits beschränken.

Zur Fixierung des Bodenbereichs beim Ausschäumen des Paneels mit geschäumtem Kunststoff sind die Stützabschnitte mit dem Bodenbereich der Mulde verklebt Der Bodenbereich der Mulde kann sich dann nicht zwischen den Stützabschnitten nach innen in den Aufnahmeraum hineinziehen und sich in Richtung des Eingriffsabschnitts biegen bzw. wölben.

Zusätzlich sind die Randbereiche der Ladungssicherungsschiene mit den Randbereichen der Mulde verklebt. Über die entsprechenden Verbindungen können die bei der Ladungssicherung auf die Ladungssicherungsschienen wirkenden Kräfte besser an das Paneel abgeleitet werden. Außerdem kann, insbesondere zusammen mit den mit dem Bodenbereich der Mulde verklebten Stützabschnitten, eine größere Krafteinleitungsfläche bereitgestellt werden. Zudem können dann Kräfte auf unterschiedlichen Ebenen in das Paneel eingeleitet werden, nämlich beispielsweise auf der Ebene des Bodenbereichs und etwa auf der Ebene der Innenseite des Paneels. Die Stützabschnitte erstrecken sich vorzugsweise wenigstens im Wesentlichen ununterbrochen in Längsrichtung der Ladungssicherungsschiene. Auf diese Weise wird eine bessere und großflächigere Kraftableitung bereitgestellt. Zudem wird der Bodenbereich besser gegenüber einem Ausbeulen während des Ausschäumens gesichert. Außerdem lassen sich entsprechende Ladungssicherungen einfacher fertigen. Alternativ oder zusätzlich erstrecken sich die Stützabschnitte über wenigstens im Wesentlichen die gesamte Längserstreckung der Ladungssicherungsschiene. Dabei werden ebenfalls die zuvor genannten Vorteile erreicht, wenn auch auf etwas andere Weise.

Aus Kostengesichtspunkten wird die Ladungssicherungsschiene aus Blech, vorzugsweise Stahlblech, ausgebildet. Insbesondere bei der Verwendung von Stahlblech wird dabei eine hohe Festigkeit und Steifigkeit der Ladungssicherungsschiene bereitgestellt, um den Belastungen bei der Ladungssicherung zuverlässig zu widerstehen. Wenn die Ladungssicherungsschiene als gerolltes Blechteil oder gerolltes Profil ausgebildet ist, kann die Ladungssicherungsschiene nicht nur einfach und kostengünstig, sondern auch materialsparend gefertigt werden, insbesondere im Vergleich zu Strangpressprofilen.

Um zugleich leichte, stabile und langlebige Paneele bereitstellen zu können, umfasst das wenigstens eine Paneel eine zum Laderaum weisende innere Decklage, eine äußere Decklage und eine dazwischen angeordnete Kernlage. Dabei ist die Mulde wenigstens von der inneren, vorzugsweise eine Blechschicht umfassenden, Decklage gebildet. Die Mulde wird dabei vorzugsweise auch insoweit durch die Kernlage gebildet, als dass die Kernlage im Bereich der Mulde entsprechend der Tiefe der Mulde dünner ausgebildet wird. Mit anderen Worten wird nur der verbleibende Raum zwischen der äußeren Decklage und der die Mulde formenden inneren Decklage von der Kernlage bzw. dem entsprechenden Kunststoff ausgeschäumt.

Die Kernlage wird aus Gewichtsgründen und zur besseren thermischen Isolation wenigstens teilweise aus einem geschäumten Kunststoff, insbesondere Polyurethan, gebildet. Dabei ist es zur Vereinfachung und Beschleunigung der Paneelherstellung weiter bevorzugt, wenn der Kunststoff zwischen der inneren Decklage und der äußeren Decklage, insbesondere an die innere Decklage angrenzend, ausgeschäumt wird. Entsprechende Paneele sind kostengünstig und zudem kommen die Vorteile der Ladungssicherungsschiene bei entsprechenden Paneelen aus den genannten Gründen besonders zum Tragen.

Um die Funktionalität der Ladungssicherungsschiene zu erhöhen, ohne diese unbedingt größer ausbilden zu müssen, ist zwischen dem Eingriffsabschnitt und wenigstens einem Rand der Ladungssicherungsschiene wenigstens eine zum Laderaum hin geöffnete Nut vorgesehen. Die Nut kann dann zur Aufnahme weiterer Ladungssicherungsmittel dienen oder weitere Funktionalitäten neben den Funktionalitäten der Öffnungen im Eingriffsabschnitt übernehmen. Daher ist es weiter bevorzugt, wenn zwischen jedem Rand der Ladungssicherungsschiene und/oder wenigstens einem Randbereich der Mulde einerseits und dem Eingriffsabschnitt andererseits wenigstens eine entsprechende Nut vorgesehen ist. Besonders bevorzugt ist es dabei, zur Ausnutzung des durch die Ladungssicherungsschiene bereitgestellten Platzes, wenn die wenigstens eine Nut im Bereich wenigstens eines Stützabschnitts vorgesehen ist. Der Stützabschnitt kann dann eine doppelte Funktionalität, insbesondere die Nut, bereitstellen. Außerdem ist es fertigungstechnisch sehr einfach, im Stützabschnitt eine entsprechende Nut vorzusehen, da die Ladungssicherungsschiene dort ohnehin in Richtung des Bodenbereichs der Mulde geführt werden muss. Dies kann beispielsweise in Form eines mehr oder weniger U-förmigen Abschnitts geschehen, der gleichfalls eine zum Laderaum offene Nut bilden kann. Der Stützabschnitt kann dann einfach durch Rollieren, Umbiegen oder Kanten der Ladungssicherungsschiene bereitgestellt werden.

Der einfacheren Herstellung und der besseren Nutzbarkeit halber bietet es sich an, wenn sich die wenigstens eine Nut in Längsrichtung der Ladungssicherungsschiene erstreckt. Umso mehr gilt dies, wenn die Nut dabei wenigstens im Wesentlichen ununterbrochen ausgebildet ist. Alternativ, insbesondere aber zusätzlich dazu, kann die wenigstens eine Nut sich wenigstens im Wesentlichen über die gesamte Längserstreckung der Ladungssicherungsschiene erstrecken. Dann kann die Funktionalität der Nut entsprechend wenigstens im Wesentlichen über die gesamte Längserstreckung der Ladungssicherungsschiene genutzt werden, was die Flexibilität der Nutzung der Ladungssicherungsschiene erhöht.

Wenn sich der Querschnitt der wenigstens einen Nut zwischen dem Grund der Nut und der Öffnung der Nut wenigstens abschnittsweise verjüngt, kann die Nut darin eingeführte Objekte formschlüssig halten. Bei in Längsrichtung der Ladungssicherungsschiene gleichbleibender Querschnittsform der Nut kann das Objekt zudem bedarfsweise in Längsrichtung der Ladungssicherungsschiene verschoben werden. Daher kann es weiter bevorzugt sein, wenn in dem sich verjüngenden Abschnitt der Nut ein Nutenstein und/oder eine Scheuerleiste formschlüssig aufgenommen ist.

Im Falle der Scheuerleiste erstreckt sich diese wenigstens im Wesentlichen von dem Eingriffsabschnitt weg in Richtung des Rands der Ladungssicherungsschiene und bedarfsweise auch darüber hinaus. Dann kann die Scheuerleiste Beschädigungen der Ladungssicherungsschiene und/oder des Paneels durch gegen das Paneel schlagende oder an dem Paneel entlang scheuernde Ladung verhindern. Alternativ oder zusätzlich kann die Scheuerleiste über eine Rastverbindung in der Nut gehalten sein. Dann kann die Scheuerleiste im Bedarfsfall einfach nachgerüstet werden, indem die Scheuerleiste einfach in die Nut eingeclipst bzw. verrastet wird. Alternativ oder zusätzlich kann die Scheuerleiste aber auch mit dem Paneel verklebt sein. Dies erlaubt eine schnelle und zuverlässige Montage der Scheuerleiste.

Um in der wenigstens einen Nut ein Ladungssicherungsmittel oder andere Zubehörteile des Kofferaufbaus zu verankern oder zu sichern, kann wenigstens eine Nutflanke wenigstens einer Nut in Richtung des Grunds der Nut gegenüber einer senkrecht zum Eingriffsabschnitt ausgerichteten Ebene nach innen in Richtung des Aufnahmeraums und/oder nach außen in Richtung des zugehörigen Rands der Ladungssicherungsschiene geneigt sein. Auf diese Weise wird beispielsweise in einer Richtung senkrecht zum Paneel ein Hinterschnitt bereitgestellt in dem ein Ladungssicherungsmittel oder dergleichen formschlüssig festgelegt werden kann. In diesem Zusammenhang wird darauf hingewiesen, dass bei der Ladungssicherung die Auszugsrichtung des Ladungssicherungsmittels senkrecht zum Paneel ausgerichtet sein kann, aber nicht muss. Daher muss der Hinterschnitt in einer Richtung senkrecht zum Paneel nicht unbedingt sehr groß ausgebildet sein. Zudem kann eine geneigte Flanke der Nut auch dann bevorzugt sein, wenn sich dabei kein Hinterschnitt bildet, etwa zum leichteren Einführen oder besseren Ausrichten eines Ladungssicherungsmittels in die entsprechende Nut bzw. in der entsprechenden Nut.

Um das Beladen des Kofferaufbaus nicht zu behindern und auch im Bereich der Mulde eine hinreichende thermische Insolation bereitstellen zu können, kann die Ladungssicherungsschiene wenigstens im Wesentlichen bündig mit dem Paneel, insbesondere der inneren Decklage angrenzend zur Mulde aufgenommen sein. Alternativ oder zusätzlich kann dies aus denselben Gründen auch für den Eingriffsabschnitt der Ladungssicherungsschiene gelten. Auf diese Weise wird zudem ein recht tiefer Aufnahmeraum für die durch die Öffnungen des Eingriffsabschnitts geführten Abschnitte der Ladungssicherungsmittel geschaffen.

Nachfolgend wird die Erfindung anhand einer lediglich ein Ausführungsbeispiel darstellenden Zeichnung näher erläutert. In der Zeichnung zeigt
- Fig. 1: einen erfindungsgemäßen Kofferaufbau eines Nutzfahrzeugs in einer schematischen perspektivischen Darstellung,
- Fig. 2: ein Detail eines Seitenwandpaneels des Kofferaufbaus aus Fig. 1 im Bereich einer Ladungssicherungsschiene in einer Schnittansicht quer zum Paneel,
- Fig. 3: das Detail des Seitenwandpaneels aus Fig. 2 mit der Ladungssicherungsschiene in einer perspektivischen Schnittansicht und
- Fig. 4: ein Detail eines alternativen Seitenpaneels gemäß Fig. 3 in einer perspektivischen Schnittansicht.

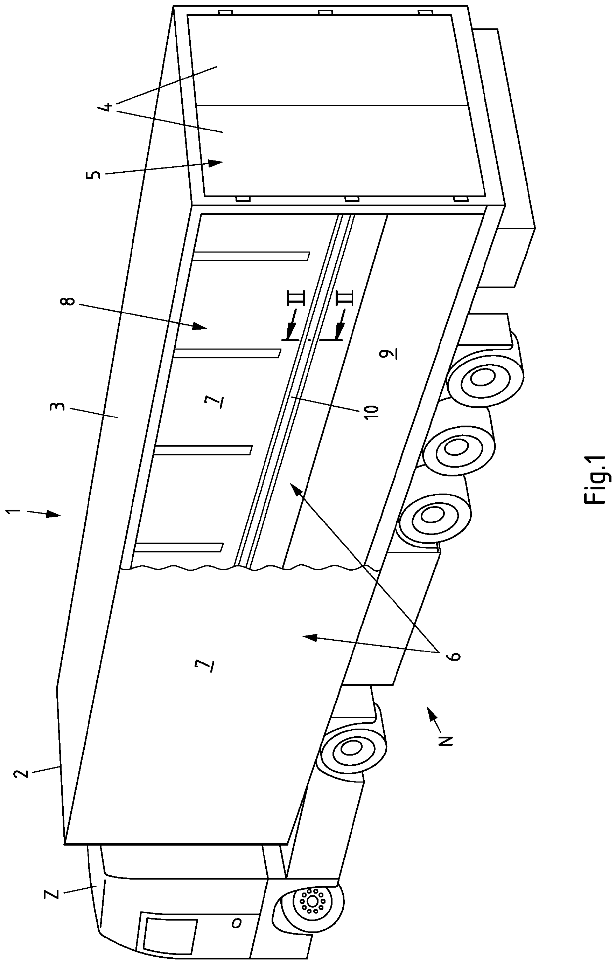

In der Fig. 1 ist ein Kofferaufbau 1 eines Nutzfahrzeugs N in Form eines Sattelaufliegers dargestellt, der von einem Zugfahrzeug Z gezogen wird. Der Kofferaufbau 1 umfasst eine feste Stirnwand 2, ein festes Dach 3, eine durch Flügeltüren 4 gebildete Rückwand 5 und feste Seitenwände 6, die jeweils durch Paneele 7, also Seitenwandpaneele, gebildet werden. Der Kofferaufbau 1 umschließt dabei einen Laderaum 8 zur Aufnahme der zu transportierenden Güter. Das Paneel 7 der vorderen Seitenwand 6 ist teilweise weggelassen worden, um den Blick in den Laderaum 8, auf den Ladeboden 9 und auf die Ladungssicherungsschiene 10 des hinteren Paneels 7 freizugeben.

In dem dargestellten und insoweit bevorzugten Paneel 7 der Seitenwand 6 sind im Wesentlichen über die gesamte Längserstreckung der Paneele 7 Ladungssicherungsschienen 10 in die Paneele 7 eingelassen. Grundsätzlich können aber auch über die Längserstreckung der Paneele 7 mehrere voneinander beabstandete Ladungssicherungsschienen 10 hintereinander vorgesehen sein. Alternativ oder zusätzlich könnte auch das Dach 3 und/oder die Stirnwand 2 als Paneel ausgebildet sein, in das wenigstens eine Ladungssicherungsschiene 10 eingelassen ist.

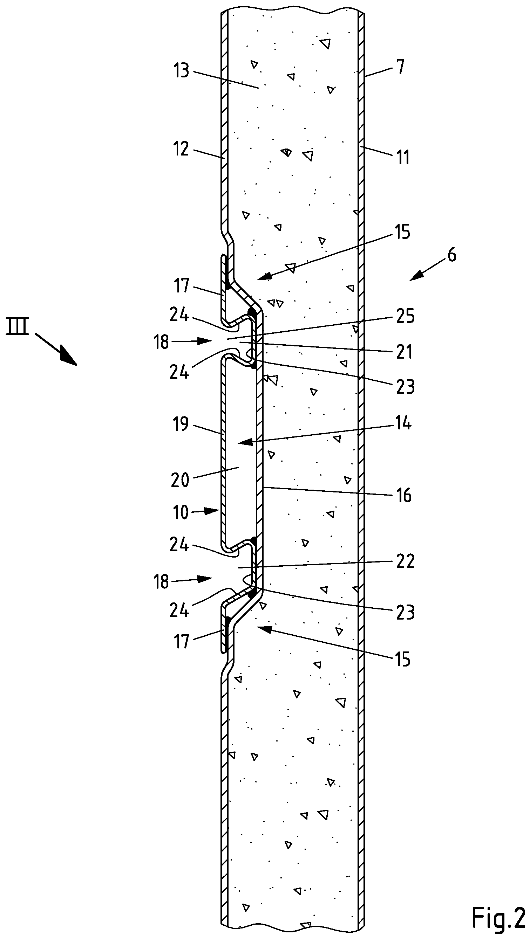

In der Fig. 2 ist ein Querschnitt durch ein eine Seitenwand 6 bildendes Paneel 7 dargestellt. Das Paneel 7 weist eine äußere Decklage 11 und eine zum Laderaum 8 des Kofferaufbaus 1 weisende innere Decklage 12 auf. Die Decklagen 11,12 können mehrschichtig aufgebaut sein. Dabei kommen aus optischen Gesichtspunkten beispielsweise Folien oder Lackierungen als Schichten in Frage. Es können aber auch als Dampf- oder Gassperren wirkende Folien, etwa Aluminiumfolien, oder andere Schichten vorgesehen sein. Die Decklagen 11,12 weisen jedoch wenigstens eine strukturgebende Lage auf, die die Steifigkeit des Paneels wenigstens im Wesentlichen mitbestimmt. Dabei kann es sich um einen Kunststoff, insbesondere einen faserverstärkten Kunststoff handeln. Beim dargestellten und insoweit bevorzugten Kofferaufbau wird die strukturgebende Lage der inneren Decklage 12 durch ein Blech, insbesondere Stahlblech, bereitgestellt. Zwischen der inneren Decklage 12 und der äußeren Decklage 11 ist eine Kernlage 13 aus einem geschäumten Kunststoff vorgesehen. Dabei ist der Kunststoff ungeschäumt zwischen die innere Decklage 12 und die äußere Decklage 11 eingebracht und dort ausgeschäumt worden. Um dem Expansionsdruck des Kunststoffs beim Ausschäumen standzuhalten, werden die innere Decklage 12 und die äußere Decklage 11 während des Ausschäumens des Kunststoffs durch eine Form in Position gehalten.

Die innere Decklage 12 ist abschnittsweise nach innen umgeformt und bildet so eine sich in Längsrichtung des Paneels 7 weisende rinnenförmige Mulde 14, in der die Ladungssicherungsschiene 10 bündig aufgenommen ist. Die dargestellte und insoweit bevorzugte Ladungssicherungsschiene 10 ist aus einem Stahlblech gebildet. Das Stahlblech wurde durch Rollieren zu dem dargestellten Profil umgeformt.

Die Mulde 14 umfasst Randbereiche 15 und einen dazwischen vorgesehenen Bodenbereich 16. Im Randbereich 15 der Mulde 14 ist der Randbereich 17 der Ladungssicherungsschiene 10 mit der inneren Decklage 12 verklebt, und zwar so, dass der Randbereich 17 der Ladungssicherungsschiene etwa bündig mit der Innenseite des Paneels 7 bzw. der durch die Innenseite des Paneels 7 definierten Ebene angeordnet ist. In diesem Bereich ist die innere Decklage 12 lediglich um die Dicke des Randbereichs 17 der Ladungssicherungsschiene nach innen versetzt. An diesen Bereich der Mulde 14 schließt sich ein Bereich an, in dem sich die innere Decklage 12 schräg nach innen in das Paneel 7 hinein erstreckt. Dieser Bereich des Randbereichs 15 der Mulde 14 kann als Flanke der Mulde 14 aufgefasst werden. Zwischen den Randbereichen 15 der Mulde weist die dargestellte und insoweit bevorzugte Mulde 14 einen wenigstens im Wesentlichen ebenen Bodenbereich 16 auf.

Mit diesem Bodenbereich 16 sind zwei Stützabschnitte 18, die sich auf dem Bodenbereich 16 abstützen, mit dem Bodenbereich 16 verklebt. Die Stützabschnitte 18 sind bezogen auf die Ladungssicherungsschiene 10 lediglich über einen Eingriffsabschnitt 19 miteinander verbunden. Zwischen dem Eingriffsabschnitt 19, dem Bodenbereich 16 der Mulde 14 und den sich auf dem Bodenbereich abstützenden Stützabschnitten 18 bildet sich so ein Aufnahmeraum 20 zur wenigstens teilweisen Aufnahme von Ladungssicherungsmitteln aus.

Die Stützabschnitte 18 sind etwa U-förmig ausgebildet und bilden zum Laderaum 8 offene Nuten 21,22. Der Grund 23 der Nuten 21,22 ist bei der dargestellten und insoweit bevorzugten Ladungssicherung eben ausgebildet. Die Flanken 24 der Nuten 21,22 sind zudem gegenüber einer in Längserstreckung der Ladungssicherungsschiene 10 weisenden und senkrecht zum Paneel 7 ausgerichteten Ebene schräg nach innen oder nach außen jeweils bezogen auf die Ladungssicherungsschiene 10 ausgerichtet. Die Nuten 21,22 bilden somit in einer Richtung senkrecht zum Paneel 7 Hinterschneidungen, an denen beispielsweise Ladungssicherungsmittel gehalten werden können. Eine Nut 21 verjüngt sich vom Grund 23 der Nut 21 in Richtung der Öffnung 25 der Nut 21. Damit ist diese Nut 21 dazu geeignet, ein Objekt etwa in Form eines Nutensteins oder einer Scheuerleiste aufzunehmen und formschlüssig zu halten. Der Querschnitt des Nutensteins kann dabei bedarfsweise kleiner als der Querschnitt der Nut 21 ausgebildet sein, so dass der Nutenstein in Längsrichtung der Ladungssicherungsschiene in der Nut 21 verschiebbar angeordnet sein kann. Der Querschnitt des Nutensteins kann aber auch im Wesentlichen mit dem Querschnitt der Nut 21 korrespondieren, so dass der Nutenstein in Längsrichtung der Nut 21 reibschlüssig gehalten ist.

Die die Nuten 21,22 bereitstellenden Stützbereiche 18 sind bezogen auf die Ladungssicherungsschiene 10 ausschließlich über den Eingriffsabschnitt 19 miteinander verbunden. Zwischen dem Eingriffsabschnitt 19, den Stützabschnitten 18 und dem Bodenbereich 16 der Mulde 14 bildet sich somit ein Aufnahmetraum 20 zum Eingreifen von Ladungssicherungsmitteln aus.

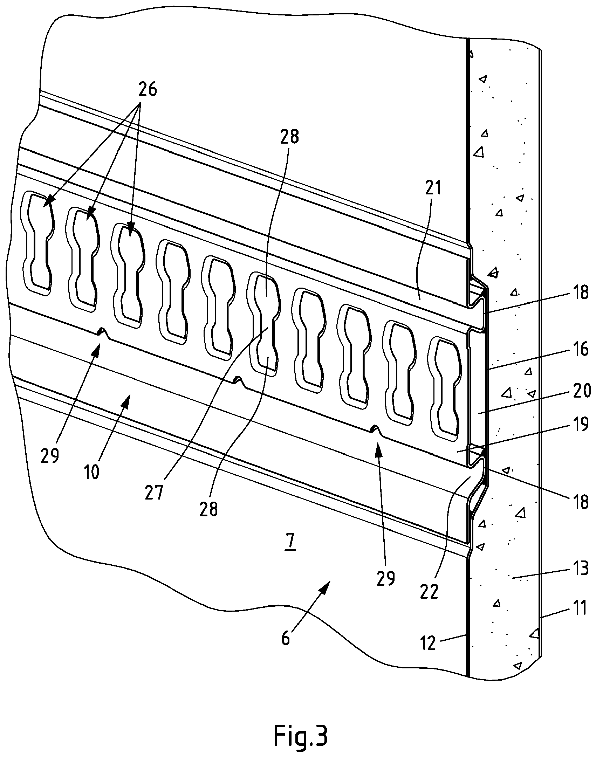

Der Eingriffsbereich 19 ist insbesondere in der Fig. 3 dargestellt, die das Paneel 7 und die Ladungssicherungsschiene 10 in einer perspektivischen Schnittansicht zeigt. Der Eingriffsbereich 19 weist eine Reihe in Längsrichtung der Ladungssicherungsschiene 10 nebeneinander angeordneter Öffnungen 26 auf, die etwa durch Stanzen vorgesehen sein können. In die Öffnungen 26 können Teile von Ladungssicherungsmitteln eingeführt werden, um die Ladungssicherungsmittel formschlüssig in der Ladungssicherungsschiene 10 zu halten. Insbesondere können Haken von Zurrgurten in die Öffnungen 26 eingeführt und die Haken in den Aufnahmeraum 20 hinter dem Eingriffsabschnitt 19 formschlüssig eingehakt werden, so dass der Zurrgurt formschlüssig in der Öffnung der Ladungssicherungsschiene 10 gehalten ist.

Die Öffnungen 26 des Eingriffsabschnitts 19 sind bei der dargestellten und insoweit bevorzugten Ladungssicherungsschiene 10 gleichartig ausgebildet, was jedoch nicht zwingend erforderlich ist. Ferner weisen die Öffnungen 26 einen mittleren Stegabschnitt 27 und zwei sich gegenüber dem Stegabschnitt 27 zur Seite hin erweiternde Lochabschnitte 28 auf. Die Öffnungen 26 weisen damit die Form eines doppelten bzw. gespiegelten Schlüsselochs auf. An der Unterseite des Eingriffsabschnitts 19 sind in gewissen Abständen Ablauföffnungen 29 vorgesehen, die ein Ablaufen von Wasser erlauben, etwa nach einem Ausspritzen des Laderaums 8.

Oberhalb und unterhalb des Eingriffsabschnitts 19 sind die sich durchgängig und ununterbrochen mit konstantem Querschnitt in Längsrichtung der Ladungssicherungsschiene 10 erstreckenden Nuten 21,22 vorgesehen. Die Nuten 21,22 werden von den Stützabschnitten 18 der Ladungssicherungsschiene 10 gebildet, die mit ihrer insbesondere ebenen Rückseite mit dem Bodenbereich 16 der Mulde 14 verklebt sind.

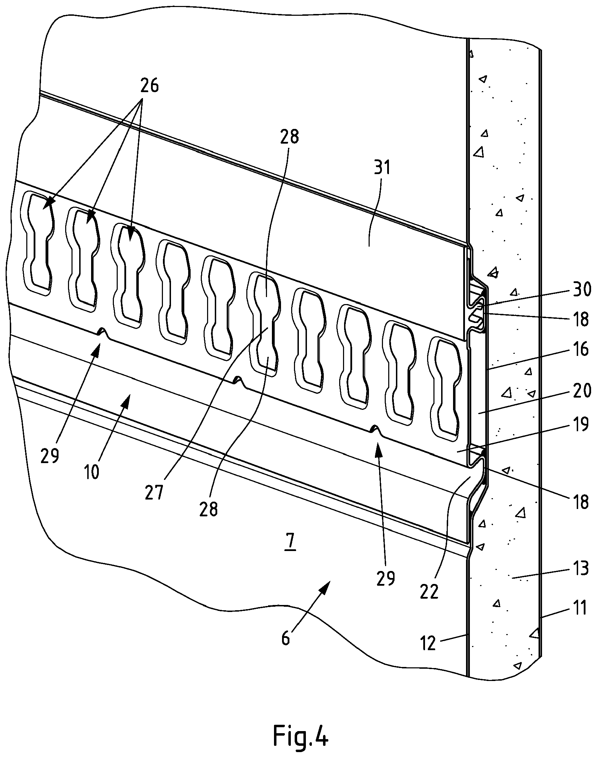

In der Fig. 4 ist das Detail des Paneels 7 aus Fig. 3 dargestellt, wobei in die obere, sich längs zur Ladungssicherungsschiene 10 erstreckende Nut 21, ein korrespondierender Verbindungsabschnitt 30 einer Scheuerleiste 31 eingesetzt ist. Der Verbindungsabschnitt 30 ist in einer Richtung senkrecht zum Paneel 7 formschlüssig gehalten. Die dargestellte und insoweit bevorzugte Scheuerleiste 31 ist durch Einsetzen des Verbindungsabschnitts 30 in die Nut 21 mit der Ladungssicherungsschiene 10 verrastet. Die Scheuerleiste 31 und die Ladungssicherungsschiene 10 bilden also eine Rastverbindung. Die Scheuerleiste 31 erstreckt sich in Längsrichtung der Ladungssicherungsschiene 10, auch wenn dies nicht über die gesamte Längserstreckung der Ladungssicherungsschiene 10 erforderlich ist. Dabei deckt die Scheuerleiste 31 einen Teil der Ladungssicherungsschiene 10 und einen Teil des sich an die Ladungssicherungsschiene 10 angrenzenden Paneels 7 ab. Die Ladung, ein Hubwagen oder dergleichen scheuert daher beim Beladen, Entladen und/oder während der Fahrt insbesondere an der Scheuerleiste 31. Die Scheuerleiste 31 kann widerstandfähiger gegenüber einem entsprechenden Scheuern ausgebildet und/oder im Falle erhöhter Abnutzung einfacher ausgetauscht bar sein als das Paneel 7 selbst. Zudem kann die Scheuerleiste 31 mit der inneren Decklage 12 und/oder der Ladungssicherungsschiene 10 verklebt sein.

## Patentansprüche

1. Kofferaufbau (1) für ein Nutzfahrzeug (N), insbesondere Lastkraftwagen, Anhänger oder Sattelauflieger, mit wenigstens einem Paneel (7), wobei angrenzend zum Laderaum (8) in wenigstens einer Mulde (14) des wenigstens einen Paneels (7) wenigstens eine Ladungssicherungsschiene (10) wenigstens teilweise aufgenommen ist, wobei die Mulde (14) sich in Längsrichtung erstreckende Randbereiche (15) und dazwischen einen Bodenbereich (16) aufweist, wobei die Ladungssicherungssicherungsschiene (10) einen sich in Längsrichtung erstreckenden und in Längsrichtung verteilte Öffnungen (26) zum Einführen von Ladungssicherungsmitteln bereitstellenden Eingriffsabschnitt (19) aufweist, wobei zwischen dem Eingriffsabschnitt (19) und dem Bodenbereich (16) der Mulde (14) ein Aufnahmeraum (20) zum teilweisen Aufnehmen der durch die Öffnungen (26) eingeführten Ladungssicherungsmittel vorgesehen ist, wobei die Ladungssicherungsschiene (10) zwei sich in Längsrichtung der Ladungssicherungsschiene (10) erstreckende, über den Eingriffsabschnitt (19) miteinander verbundene und sich am Bodenbereich (16) der Mulde (14) abstützende Stützabschnitte (18) aufweist, wobei das wenigstens eine Paneel (7) eine zum Laderaum (8) weisende innere Decklage (12), eine äußere Decklage (11) und eine dazwischen angeordnete Kernlage (13) umfasst und wobei die Mulde (14) wenigstens von der inneren Decklage (12) gebildet wird,
**dadurch gekennzeichnet, dass**
zwischen dem Eingriffsabschnitt (19) und wenigstens einem Rand (17) der Ladungssicherungsschiene (10) wenigstens eine zum Laderaum (8) hin geöffnete Nut (21,22) vorgesehen ist und dass die Stützabschnitte (18) mit dem Bodenbereich (16) der Mulde (14) und die Randbereiche (17) der Ladungssicherungsschiene (10) mit den Randbereichen (15) der Mulde (14) verklebt sind.

2. Kofferaufbau nach Anspruch 1,
**dadurch gekennzeichnet, dass**
der Aufnahmeraum (20) frei ist von, insbesondere zwischen den in Längsrichtung der Ladungssicherungsschiene (10) verteilten Öffnungen (26) vorgesehenen, sich am Bodenbereich (16) der Mulde (14) abstützenden Stützabschnitte (18).

3. Kofferaufbau nach Anspruch 1 oder 2,
**dadurch gekennzeichnet, dass**
der Aufnahmeraum (20) zum teilweisen Aufnehmen der Ladungssicherungsmittel zwischen dem Eingriffsabschnitt (19), dem Bodenbereich (16) der Mulde (14) und den Stützabschnitten (18) ausgebildet ist.

4. Kofferaufbau nach einem der Ansprüche 1 bis 3,
**dadurch gekennzeichnet, dass**
sich die Stützabschnitte (18) wenigstens im Wesentlichen ununterbrochen in Längsrichtung der Ladungssicherungsschiene (10) erstrecken und/oder dass sich die Stützabschnitte (18) über wenigstens im Wesentlichen die gesamte Längserstreckung der Ladungssicherungsschiene (10) erstrecken.

5. Kofferaufbau nach einem der Ansprüche 1 bis 4,
**dadurch gekennzeichnet, dass**
die Ladungssicherungsschiene (10) aus Blech, vorzugsweise Stahlblech, ausgebildet ist und/oder dass die Ladungssicherungsschiene (10) als gerolltes Blechteil oder Profil ausgebildet ist.

6. Kofferaufbau nach einem der Ansprüche 1 bis 5,
**dadurch gekennzeichnet, dass** die Mulde (14) wenigstens von der inneren, eine Blechschicht umfassenden Decklage (12) gebildet wird.

7. Kofferaufbau nach einem der Ansprüche 1 bis 6,
**dadurch gekennzeichnet, dass**
die Kernlage (13) wenigstens teilweise aus einem geschäumten Kunststoff, insbesondere Polyurethan, gebildet ist und, vorzugsweise, dass der Kunststoff zwischen der inneren Decklage (12) und der äußeren Decklage (11), insbesondere an die innere Decklage (12) angrenzend, ausgeschäumt ist.

8. Kofferaufbau nach einem der Ansprüche 1 bis 7,
**dadurch gekennzeichnet, dass**
die wenigstens eine zum Laderaum (8) hin geöffnete Nut (21,22) zwischen dem Eingriffsabschnitt (19) und wenigstens einem Randbereich (15) der Mulde (14), insbesondere im Bereich wenigstens eines Stützabschnitts (18), vorgesehen ist.

9. Kofferaufbau nach Anspruch 8,
**dadurch gekennzeichnet, dass**
sich die wenigstens eine Nut, vorzugsweise wenigstens im Wesentlichen ununterbrochen, in Längsrichtung der Ladungssicherungsschiene erstreckt und, vorzugsweise dass die wenigstens eine Nut sich wenigstens im Wesentlichen über die gesamte Längserstreckung der Ladungssicherungsschiene erstreckt.

10. Kofferaufbau nach Anspruch 8 oder 9,
**dadurch gekennzeichnet, dass**
sich der Querschnitt der wenigstens einen Nut (21) zwischen dem Grund (23) der Nut (21) und der Öffnung (25) der Nut (21) wenigstens abschnittsweise verjüngt und, vorzugsweise, dass in dem sich verjüngenden Abschnitt der Nut (21) ein Nutenstein und/oder eine Scheuerleiste (31) formschlüssig aufgenommen ist.

11. Kofferaufbau nach Anspruch 10,
**dadurch gekennzeichnet, dass**
die Scheuerleiste (31) sich wenigstens im Wesentlichen von dem Eingriffsabschnitt (19) weg erstreckt und/oder die Scheuerleiste (31) über eine Rastverbindung in der Nut (21) gehalten ist und/oder die Scheuerleiste (31) mit dem Paneel (7) verklebt ist.

12. Kofferaufbau nach einem der Ansprüche 8 bis 11,
**dadurch gekennzeichnet, dass**
wenigsten eine Nutflanke (24) wenigstens einer Nut (21,22) in Richtung des Grunds (23) der Nut (21,22) gegenüber einer senkrecht zum Eingriffsabschnitt (19) ausgerichteten Ebene nach innen in Richtung des Aufnahmeraums (20) und/oder nach außen in Richtung des zugehörigen Rands (17) der Ladungssicherungsschiene (10) geneigt ist.

13. Kofferaufbau nach einem der Ansprüche 1 bis 12,
**dadurch gekennzeichnet, dass**
die Ladungssicherungsschiene (10) und/oder der Eingriffsabschnitt (19) in der Mulde (14) wenigstens im Wesentlichen bündig mit dem Paneel (7), insbesondere der inneren Decklage (12), angrenzend zur Mulde (14) aufgenommen ist.

## Claims

1. Box body (1) for a utility vehicle (N), in particular lorry, trailer or semi-trailer, having at least one panel (7), wherein adjacent to the loading space (8) in at least one recess (14) of the at least one panel (7) at least one load securing rail (10) is at least partially received, wherein the recess (14) has edge regions (15) extending in longitudinal direction and therebetween a bottom region (16), wherein the load securing rail (10) has an engagement section (19) extending in longitudinal direction and providing openings (26) distributed in longitudinal direction for inserting load securing means, wherein between the engagement section (19) and the bottom region (16) of the recess (14) a receiving space (20) for partially receiving the load securing means inserted through the openings (26) is provided, wherein the load securing rail (10) has two support sections (18) extending in longitudinal direction of the load securing rail (10), connected to each other via the engagement section (19) and supported on the bottom region (16) of the recess (14), wherein the at least one panel (7) comprises an inner covering layer (12) facing the loading space (8), an outer covering layer (11) and a core layer (13) arranged therebetween and wherein the recess (14) is formed at least by the inner covering layer (12),
**characterised in that**
between the engagement section (19) and at least one edge (17) of the load securing rail (10) at least one groove (21, 22) being open towards the loading space (8) is provided and **in that** the support sections (18) are bonded to the bottom region (16) of the recess (14) and the edge regions (17) of the load securing rail (10) are bonded to the edge regions (15) of the recess (14).

2. Box body according to claim 1,
**characterised in that**
the receiving space (20) is free from support sections (18) supported on the bottom region (16) of the recess (14) and, in particular, provided between the openings (26) distributed in longitudinal direction of the load securing rail (10).

3. Box body according to claim 1 or 2,
**characterised in that**
the receiving space (20) for partially receiving the load securing means is formed between the engagement section (19), the bottom region (16) of the recess (14) and the support sections (18).

4. Box body according to any one of claims 1 to 3,
**characterised in that**
the support sections (18) extend at least substantially uninterruptedly in longitudinal direction of the load securing rail (10) and/or **in that** the support sections (18) extend over at least substantially the entire longitudinal extent of the load securing rail (10).

5. Box body according to any one of claims 1 to 4,
**characterised in that**
the load securing rail (10) is formed from sheet metal, preferably sheet steel, and/or **in that** the load securing rail (10) is formed as a rolled sheet metal part or profile.

6. Box body according to any one of claims 1 to 5,
**characterised in that**
the recess (14) is formed at least by the inner covering layer (12) comprising a sheet metal layer.

7. Box body according to any one of claims 1 to 6,
**characterised in that**
the core layer (13) is formed at least partially from a foamed plastic, in particular polyurethane, and, preferably, **in that** the plastic is foamed between the inner covering layer (12) and the outer covering layer (11), in particular adjacent to the inner covering layer (12) .

8. Box body according to any one of claims 1 to 7,
**characterised in that**
the at least one groove (21, 22) which is open towards the loading space (8) is provided between the engagement section (19) and at least one edge region (15) of the recess (14), in particular in the region of at least one support section (18).

9. Box body according to claim 8,
**characterised in that**
the at least one groove extends, preferably at least substantially uninterruptedly, in longitudinal direction of the load securing rail and, preferably, **in that** the at least one groove extends at least substantially over the entire longitudinal extent of the load securing rail.

10. Box body according to claim 8 or 9,
**characterised in that**
the cross-section of the at least one groove (21) tapers at least in sections between the base (23) of the groove (21) and the opening (25) of the groove (21) and, preferably, **in that** a sliding block and/or a rubbing strip (31) is received in a positive-locking manner in the tapering section of the groove (21).

11. Box body according to claim 10,
**characterised in that**
the rubbing strip (31) extends at least substantially away from the engagement section (19) and/or the rubbing strip (31) is held via a latch connection in the groove (21) and/or the rubbing strip (31) is bonded to the panel (7) .

12. Box body according to any one of claims 8 to 11,
**characterised in that**
at least one groove flank (24) of at least one groove (21, 22) is inclined in the direction of the base (23) of the groove (21, 22) with respect to a plane orientated perpendicularly to the engagement section (19) inwards in direction of the receiving space (20) and/or outwards in direction of the associated edge (17) of the load securing rail (10).

13. Box body according to any one of claims 1 to 12,
**characterised in that**
the load securing rail (10) and/or the engagement section (19) is received in the recess (14) at least substantially flush with the panel (7), in particular the inner covering layer (12), adjacent to the recess (14).

## Revendications

1. Carrosserie en fourgon (1) pour un véhicule utilitaire (N), notamment un poids lourd, une remorque ou une semi-remorque, avec au moins un panneau (7), au moins un rail de sécurisation de charge (10) étant au moins partiellement reçu, adjacent à l'espace de chargement (8), dans au moins un creux (14) du au moins un panneau (7), le creux (14) présentant des zones marginales (15) s'étendant en direction longitudinale et une zone de fond (16) entre celles-ci, le rail de sécurisation de charge (10) présentant une section d'engagement (19) s'étendant en direction longitudinale et fournissant des ouvertures (26) reparties en direction longitudinale pour l'insertion des moyens de sécurisation de charge, un espace de réception (20) étant prévu entre la section d'engagement (19) et la zone de fond (16) du creux (14) pour recevoir partiellement les moyens de sécurisation de charge insérés à travers les ouvertures (26), le rail de sécurisation de charge (10) présentant deux sections d'appui (18) s'étendant en direction longitudinale du rail de sécurisation de charge (10), reliées l'une à l'autre par la section d'engagement (19) et s'appuyant sur la zone de fond (16) du creux (14), le au moins un panneau (7) comportant une couche de recouvrement (12) intérieure dirigée vers l'espace de chargement (8), une couche de recouvrement (11) extérieure et une couche de noyau (13) agencée entre celles-ci et le creux (14) étant formé au moins par la couche de recouvrement (12) intérieure,
**caractérisé en ce que**
au moins une rainure (21, 22) ouverte vers l'espace de chargement (8) est prévue entre la section d'engagement (19) et au moins un bord (17) du rail de sécurisation de charge (10) et **en ce que** les sections d'appui (18) sont collées avec la zone de fond (16) du creux (14) et les zones marginales (17) du rail de sécurisation de charge (10) sont collées avec les zones marginales (15) du creux (14) .

2. Carrosserie en fourgon selon la revendication 1,
**caractérisé en ce que**
l'espace de réception (20) est exempt de sections d'appui (18) s'appuyant sur la zone de fond (16) du creux (14) et, notamment, prévues entre les ouvertures (26) réparties en direction longitudinale du rail de sécurisation de charge (10) .

3. Carrosserie en fourgon selon la revendication 1 ou 2,
**caractérisé en ce que**
l'espace de réception (20) pour recevoir partiellement les moyens de sécurisation de charge est formé entre la section d'engagement (19), la zone de fond (16) du creux (14) et les sections d'appui (18).

4. Carrosserie en fourgon selon l'une des revendications 1 à 3,
**caractérisé en ce que**
les sections d'appui (18) s'étendent au moins sensiblement de manière ininterrompue en direction longitudinale du rail de sécurisation de charge (10) et/ou **en ce que** les sections d'appui (18) s'étendent au moins sensiblement sur toute l'étendue longitudinale du rail de sécurisation de charge (10) .

5. Carrosserie en fourgon selon l'une des revendications 1 à 4,
**caractérisé en ce que**
le rail de sécurisation de charge (10) est formé en tôle, de préférence de tôle d'acier, et/ou **en ce que** le rail de sécurisation de charge (10) est formé en tant que pièce en tôle roulée ou profilé roulée.

6. Carrosserie en fourgon selon l'une des revendications 1 à 5,
**caractérisé en ce que**
le creux (14) est formé au moins par la couche de recouvrement (12) intérieure comportant une couche de tôle.

7. Carrosserie en fourgon selon l'une des revendications 1 à 6,
**caractérisé en ce que**
la couche de noyau (13) est formée au moins partiellement en une matière plastique moussée, notamment en polyuréthane, et, de préférence, **en ce que** la matière plastique est moussé entre la couche de recouvrement (12) intérieure et la couche de recouvrement (11) extérieure, notamment adjacente à la couche de recouvrement (12) intérieure.

8. Carrosserie en fourgon selon l'une des revendications 1 à 7,
**caractérisé en ce que**
la au moins une rainure (21, 22) ouverte vers l'espace de chargement (8) est prévue entre la section d'engagement (19) et au moins une zone marginale (15) du creux (14), notamment dans la zone d'au moins une section d'appui (18).

9. Carrosserie en fourgon selon la revendication 8,
**caractérisé en ce que**
la au moins une rainure s'étend, de préférence au moins sensiblement de manière ininterrompue, en direction longitudinale du rail de sécurisation de charge et, de préférence, **en ce que** la au moins une rainure s'étend au moins sensiblement sur toute l'étendue longitudinale du rail de sécurisation de charge.

10. Carrosserie en fourgon selon la revendication 8 ou 9,
**caractérisé en ce que**
la section transversale de la au moins une rainure (21) se rétrécit au moins par sections entre le fond (23) de la rainure (21) et l'ouverture (25) de la rainure (21) et, de préférence, **en ce qu'**un coulisseau et/ou une plinthe (31) est reçu par liaison de forme dans la section rétrécie de la rainure (21).

11. Carrosserie en fourgon selon la revendication 10,
**caractérisé en ce que**
la plinthe (31) s'étend au moins sensiblement à partir de la section d'engagement (19) et/ou la plinthe (31) est maintenue par l'intermédiaire d'une liaison d'encliquetage dans la rainure (21) et/ou la plinthe (31) est collée avec le panneau (7).

12. Carrosserie en fourgon selon l'une des revendications 8 à 11,
**caractérisé en ce que**
au moins un flanc de rainure (24) d'au moins une rainure (21, 22) est incliné en direction du fond (23) de la rainure (21, 22) par rapport à un plan orienté perpendiculairement à la section d'engagement (19) vers l'intérieur en direction de l'espace de réception (20) et/ou vers l'extérieur en direction du bord (17) associé du rail de sécurisation de charge (10).

13. Carrosserie en fourgon selon l'une des revendications 1 à 12,
**caractérisé en ce que**
le rail de sécurisation de charge (10) et/ou la section d'engagement (19) est reçu dans le creux (14) au moins sensiblement affleurement avec le panneau (7), notamment avec la couche de recouvrement (12) intérieure, adjacent au creux (14).
